# FASCICULE DE BREVET EUROPEEN

(11) **EP 2 209 009 B1**
(45) Date de publication et mention de la délivrance du brevet: **14.08.2013**
(21) Numéro de dépôt: 10150802.6
(22) Date de dépôt: 14.01.2010
(51) Int. Cl.: G01P 13/02

(54) **Procédé de commande d'un aéronef mettant en oeuvre un système de vote**
Flugzeugsteuersystem mit Wahlalgorithmus
Aircraft control system with voting algorithm.

(30) Priorité: 20.01.2009 FR 0950333
(43) Date de publication de la demande: 21.07.2010
(73) Titulaire: AIRBUS OPERATIONS (S.A.S), 31060 Toulouse (FR)
(72) Inventeur: Broquet, Alexandre, 31500, TOULOUSE (FR); Cases, Fabien, 31500, TOULOUSE (FR); Pascal, Fabien, 31450, DONNEVILLE (FR)
(74) Mandataire: Potdevin, Emmanuel Eric

(56) Documents cités:
- EP-A- 0 393 730
- FR-A- 2 850 356
- FR-A- 2 916 290
- CALIA A ET AL: "Air Data Failure Management in a Full-Authority Fly-By-Wire Control System" CONTROL APPLICATIONS, 2006 IEEE INTERNATIONAL CONFERENCE ON, IEEE, PI, 1 octobre 2006 (2006-10-01), pages 3277-3281, XP031011672 ISBN: 978-0-7803-9795-8

## Description

L'invention concerne la commande des aéronefs.

### Contexte général

La commande d'un aéronef tel qu'un avion gros porteur fait aujourd'hui intervenir des ordinateurs de bord. Pour améliorer la sécurité de cette commande, il est connu de baser l'architecture de commande sur un système de vote comprenant plusieurs instances et un arbitre ou voteur.

Un tel système de vote comprend au moins deux applications ou canaux dont la fonction est identique : fournir une donnée ou valeur. Chaque application fournit la donnée qu'elle a obtenue par son propre algorithme de calcul. L'architecture comprend également une application qui gère ou surveille ces dernières : il s'agit du voteur. Chaque application consiste en un logiciel mis en oeuvre sur un ordinateur. En fonction des données collectées, le voteur détermine quelle donnée doit être finalement transmise au circuit de commande de l'avion.

Le vote peut reposer sur le principe de la majorité ou sur le principe de l'unanimité. Un vote reposant sur le principe de l'unanimité a pour avantage que, si un résultat est obtenu, il est réputé très fiable. Ce principe a cependant pour inconvénient de ne pas tolérer la moindre défaillance. Ainsi, dès que l'une des applications fournit une donnée différente des autres, l'unanimité ne peut plus être atteinte, le vote n'aboutit à aucun résultat et aucune commande ne peut être transmise. C'est pourquoi les systèmes de vote obéissent en général au principe de la majorité.

Par ailleurs, les systèmes de vote à un voteur et deux applications sont de peu d'intérêt car toute discordance dans les votes entraîne une situation d'égalité. On associe donc en général au voteur trois applications ou plus.

C'est pourquoi il est préférable d'utiliser un système de vote comprenant un voteur et plus de deux canaux, et reposant sur le principe de la majorité. C'est le cas que nous considérerons dans la suite sans toutefois que l'invention soit limitée à ces conditions.

Dans une chaîne de traitement de données d'un avion pour l'élaboration d'une commande, le voteur se trouve en aval des applications (qui réalisent la plus grande partie de la fonction) et juste avant le système (qui va utiliser le résultat du vote).

Le voteur accomplit en général les étapes suivantes :
- étape 1 : lecture des résultats de chaque application. Cela suppose que les applications soient synchronisées ou bien qu'elles fournissent leurs résultats dans un certain délai après que la première application a transmis le sien ;
- étape 2 : comparaison des résultats de chaque application. Dans le cas nominal, les applications ont utilisé les mêmes données de départ et mis en oeuvre le même traitement logique. Elles ont donc fourni le même résultat.
- étape 3 : élimination des résultats erronés. Pour cela, on ne conserve que les informations fournies par la majorité des applications. De plus, si une application n'a pas répondu dans les temps, son résultat ne sera pas considéré ;
- étape 4 : transfert des résultats de la fonction à l'application située en aval pour son traitement dans la chaîne de commande.

Lorsqu'on compare les résultats fournis par les applications, on peut faire preuve d'une certaine tolérance, en particulier lorsque le résultat est une valeur numérique de haute précision, afin que des différences légères ne soient pas considérées comme des erreurs.

Les systèmes de vote constituent aujourd'hui une architecture classique et sont connus pour leur haute intégrité. Dans l'industrie aéronautique en particulier, les systèmes de commande de vol des avions nécessitent un fort niveau d'intégrité. C'est pourquoi leurs architectures sont généralement tolérantes à l'égard des fautes. Plus précisément, elles peuvent comprendre trois canaux principaux ainsi que deux à trois canaux de secours et enfin un module de contrôle en mode dégradé. Cette fonction sera utilisée en cas d'échec de tous les autres canaux.

D'autres architectures sont cependant connues en aéronautique.

La première est utilisée pour le calcul de la vitesse de l'air et de l'altitude. En fait, il ne s'agit pas véritablement d'un vote car le résultat fourni par chaque canal ne fait pas l'objet d'une qualification. Il s'agit seulement de calculer une valeur moyenne ou médiane. En cas d'échec de l'un des canaux, la valeur obtenue restera suffisamment proche de la valeur réelle grâce aux deux autres canaux.

Un deuxième type de vote est utilisé pour la consolidation de données, par exemple dans le cadre des alertes relatives à l'environnement de l'avion, du calcul de la position de l'avion (vote entre des données GPS fournies par des satellites pour éliminer les plus mauvaises valeurs), de la surveillance de l'ADR (pour éliminer les mauvaises entrées en raison de l'échec de parties de leur environnement) et de la vérification de l'état de l'avion (par exemple les tests pour déterminer si l'avion est "au sol"). L'ADR (de l'anglais "Air Data Reference") concerne les données aérodynamiques (altitude, vitesse de l'avion dans l'air, incidence, etc.) de référence (donc réputées précises et utilisées par l'ensemble de l'avion).

Certaines des alertes relatives à l'environnement de l'avion sont émises grâce à des données fournies par un groupe de trois calculateurs. Pour tenir compte des risques d'échec ou de mauvais calcul, un mode de vote spécifique est mis en oeuvre, qui combine le vote standard et le vote par consensus. Ainsi, pour chaque résultat fourni par ces calculateurs, le voteur vérifie si la donnée a été envoyée (si la donnée n'a pas été rafraîchie, le calculateur est considéré comme défaillant et dans le cas contraire la donnée est réputée à jour) et vérifie si ces données se trouvent dans une plage spécifique (si c'est le cas, la donnée est considérée comme "normale"). Ensuite, le voteur compare les données à jour (les autres ont été éliminées) et réalise un consensus en déterminant la valeur moyenne, la valeur médiane ou la valeur la plus haute en fonction de l'état de ces trois calculateurs.

Pour la computation de la position de l'avion, on utilise les données de vingt-quatre satellites du système GPS. Le système de positionnement détermine ensuite la meilleure valeur en comparant toutes les entrées. Pour ce faire, il calcule une fois la position de l'avion en prenant en compte tous les satellites. Ensuite, il calcule vingt-quatre fois la position de l'avion en éliminant à chaque fois un satellite différent. Ensuite, il calcule cinq cent cinquante-deux fois la position de l'avion en éliminant chaque fois un couple de satellites différent. Enfin, il utilise tous les résultats de calcul pour déterminer la meilleure position. On peut ainsi considérer que le système de positionnement réalise un vote par consensus.

Les tests d'état de l'avion, tels que ceux visant à déterminer si l'avion se trouve "au sol", utilisent plusieurs sources de données qui prennent des valeurs spécifiques lorsque l'avion est dans l'état considéré. Si au moins trois paramètres prennent ces valeurs (voire quatre dans certains cas spécifiques), alors l'avion est considéré comme se trouvant dans l'état supposé. Par exemple, l'avion est considéré comme étant "au sol" si :
- son altitude est la même que celle du sol ;
- sa vitesse au sol est inférieure à une valeur donnée ;
- la vitesse de l'air est inférieure à une valeur donnée ;
- la pression sur le train d'atterrissage est plus élevée qu'une valeur donnée ; et
- une de ses portes est ouverte.

L'invention s'applique également aux engins spatiaux. Ainsi, un processus de vote pourra être mis en oeuvre dans le cadre de la commande de différentes fonctions telles que la commande de vol, la commande et la surveillance d'un véhicule de transfert automatique, le contrôle thermique, la gestion de l'alimentation en énergie, les communications avec le sol, les corrections de trajectoire et les transferts de carburant.

Les systèmes de vote peuvent également être utilisés au sein des véhicules automobiles routiers et à bord des engins ferroviaires.

Certaines limites des systèmes de vote connus apparaissent lorsqu'on examine les conséquences de l'échec de l'un des canaux. (C'est-à-dire de l'une des applications et de l'un des équipements ou systèmes qui fournit des données à cette application.) Nous allons considérer ici deux types d'architecture quel que soit le nombre de leurs canaux.

Dans ces études de cas, nous simplifierons l'étude en considérant que les applications fournissent des sorties ou valeurs de type booléen. L'invention n'est toutefois pas restreinte à ce type de valeur.

### Conditions d'échec d'une architecture à trois canaux

Le tableau qui suit montre différents cas d'échec en présence d'un voteur qui reçoit plusieurs entrées numériques. Pour simplifier, aucune tolérance ne sera mise en oeuvre au cours de ces cas.

Dans ce tableau ainsi que les suivants, l'étape 1 est celle au cours de laquelle le voteur reçoit des données émanant des applications hébergées par les calculateurs. Au cours des étapes 2 et 3, le voteur compare les données et élimine les données erronées en les qualifiant comme telles. A l'étape 4, le voteur transmet le résultat de la fonction, sous la forme d'une donnée globale, à l'application suivante qui sera chargée de l'exploiter pour la commande.

Dans les tableaux 1 à 6, nous présentons des études de cas. Les lignes n'ont donc aucun lien chronologique entre elles.

Le cas nominal est celui où les applications travaillent toutes à partir des mêmes données et suivant la même logique de calcul. Un canal erroné est considéré comme fournissant une donnée erronée. Des canaux erronés peuvent être eux-mêmes incohérents en fournissant des données fausses différentes l'une de l'autre. Un canal perdu est un canal qui n'a pas fourni de donnée au voteur. Une donnée individuelle est une donnée transmise par une application au voteur. Une donnée globale est une donnée transmise par le voteur au dispositif de commande en aval.

On considère dans la suite que la réalité correspond à la donnée "10" de sorte que le système de vote devrait normalement fournir la donnée "10" comme donnée globale.

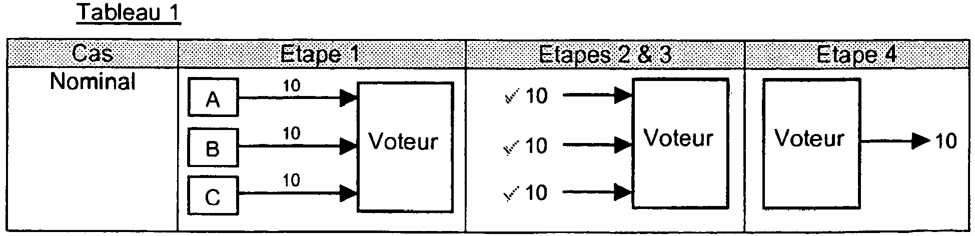

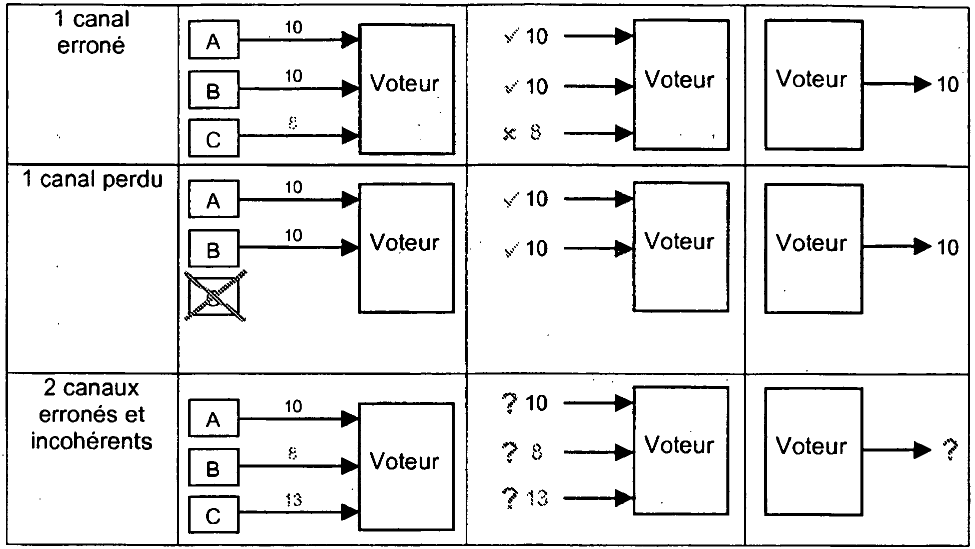

Ainsi, dans le cas nominal, toutes les applications fournissent la donnée individuelle "10" au voteur qui les qualifie toutes comme valides et transmet à l'étape 4 la donnée globale "10".

A la deuxième ligne, si un canal est erroné et fournit la donnée "8", cette dernière est détectée comme minoritaire par le voteur et donc qualifiée d'erronée, et le voteur transmet la donnée globale "10".

De même, à la ligne suivante, si un canal est perdu, le voteur ne traite que deux données et transmet la donnée "10".

Enfin, à la dernière ligne, le voteur se trouve en présence des données "10", "8" et "13", ne peut qualifier aucune d'elles faute de majorité et n'est donc pas en mesure de fournir une donnée globale à l'application en aval. On voit donc que, dans ce dernier cas, le seul parmi les quatre cas envisagés, le voteur n'est pas en mesure de poursuivre le traitement des données à l'issue de l'étape 3 et ne peut donc pas accomplir l'étape 4.

Cette incapacité à fournir une donnée est un risque que présente la plupart des systèmes de vote connus compte tenu de leur conception. Pour y pallier, il est possible de prévoir un étage logique supplémentaire qui permettra au voteur de poursuivre malgré tout le traitement des données. C'est ce qui est présenté dans les trois premières lignes du tableau 2.

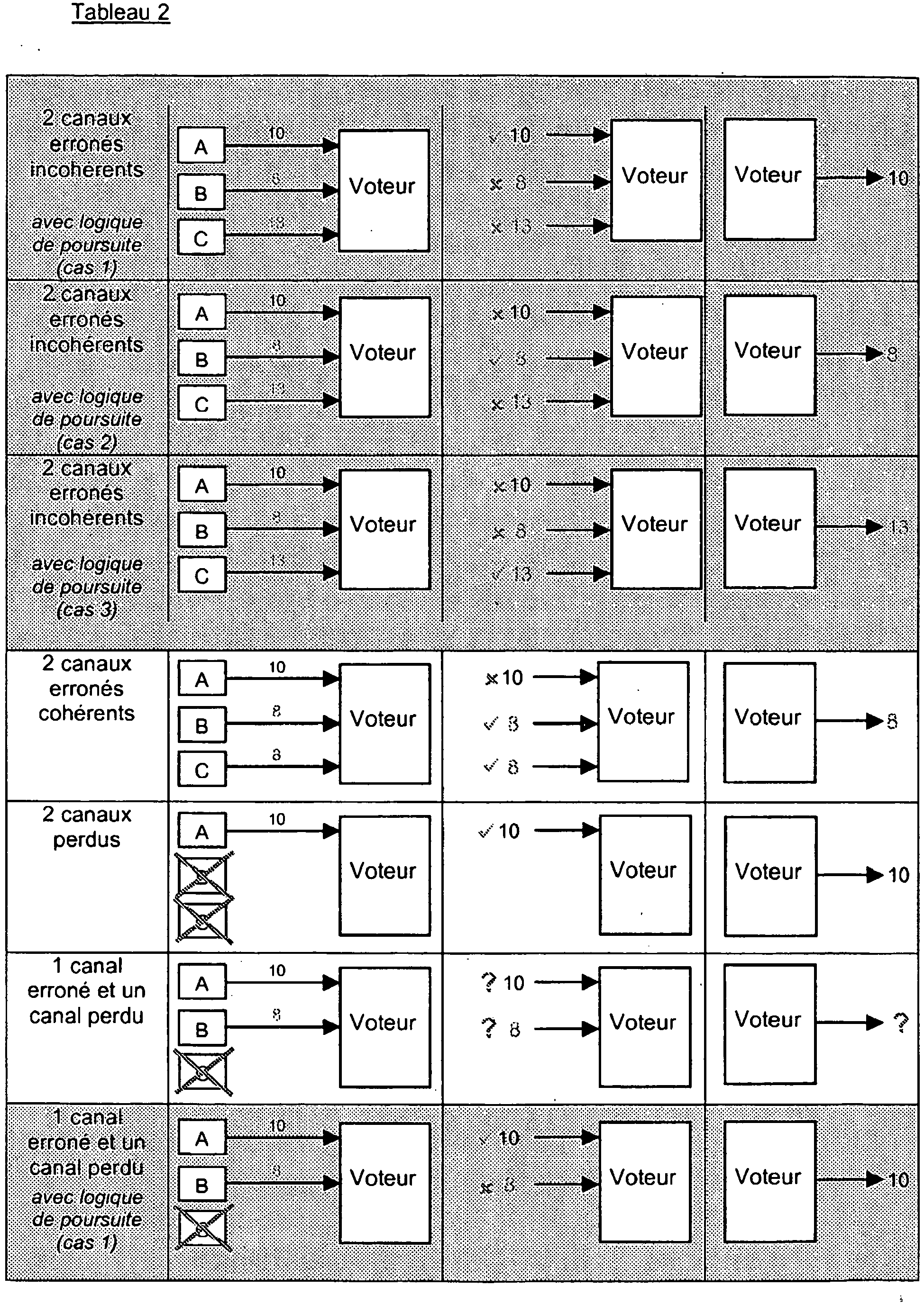

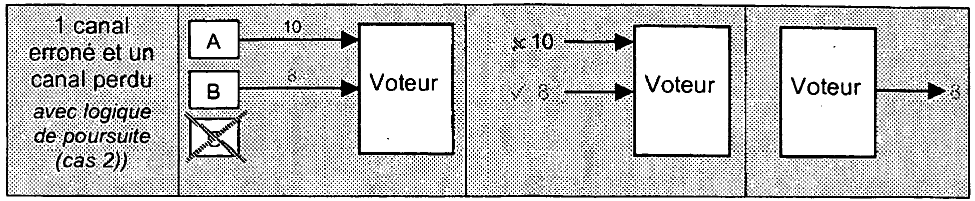

Ainsi, à la première ligne, dans la même situation que la dernière ligne du tableau 1, deux canaux sont erronés et incohérents de sorte que le voteur reçoit les données "10", "8" et "13". Grâce à la logique de poursuite de traitement dont il dispose, il qualifie comme erronées les données "8" et "13" et fournit à l'étape 4 la donnée "10".

Avec un autre type de logique de traitement comme illustré à la deuxième ligne, c'est la donnée "8" qui est qualifiée de valide et fournie à l'étape 4.

De même, dans un troisième cas de logique de traitement, c'est finalement à la ligne 3 la donnée "13" qui est fournie.

On voit donc que la mise en place d'un étage logique de poursuite de traitement peut conduire à des situations où la donnée globale ne reflète pas la réalité, situation qui peut avoir de graves conséquences pour l'ensemble du système. On s'en rend compte encore mieux dans les cinq lignes suivantes de ce tableau.

Ainsi, si deux canaux sont erronés et cohérents, le voteur a reçu une fois la donnée "10" et deux fois la donnée "8". Ces deux dernières étant majoritaires, le voteur les qualifie de valable et fournit la donnée globale "8".

A la ligne suivante, si deux canaux ont été perdus, seule persiste la donnée "10" qui est fournie comme donnée globale.

A la ligne suivante, un canal est erroné et un canal est perdu. Le voteur reçoit les données "10" et "8". Il ne sait pas les qualifier et n'est donc pas en mesure de fournir une donnée globale.

En présence d'un étage de logique de poursuite, si un canal est erroné et l'autre perdu, le voteur qui reçoit les seules données individuelles "10" et "8" qualifie cette dernière de fausse et fournit donc la donnée globale "10" dans un premier cas.

Mais dans un autre cas, à la dernière ligne, le voteur va qualifier de valable la donnée individuelle "8" et fournir cette dernière comme donnée globale.

On a illustré dans le tableau 3 la même étude dans le cas où le voteur reçoit des données individuelles de type booléen. On considère dans la suite que la réalité correspond à la donnée "Vrai" de sorte que le système de vote devrait normalement fournir la donnée "Vrai" comme donnée globale.

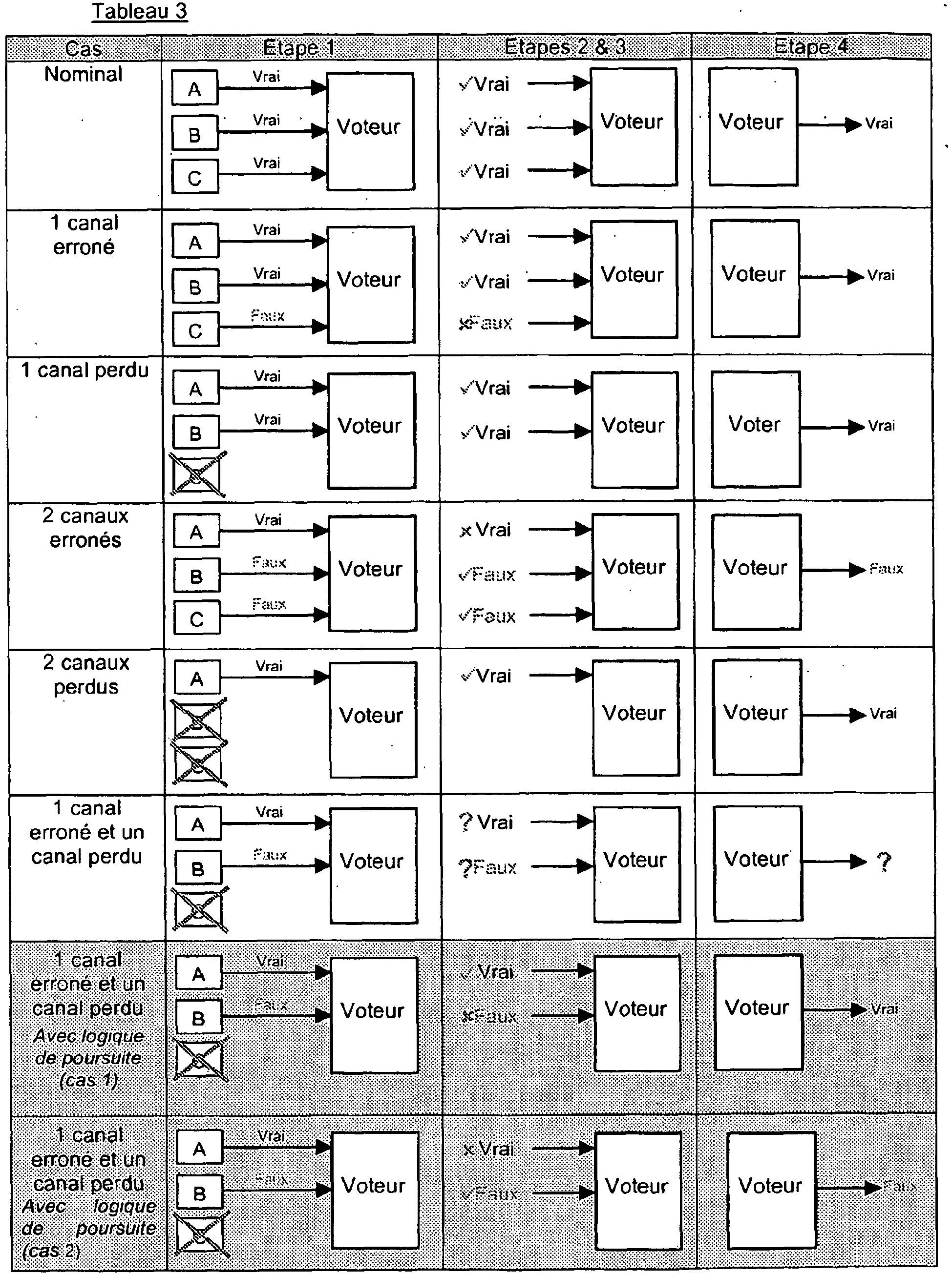

Ainsi, dans le cas nominal, toutes les applications fournissent la donnée "Vrai" de sorte que la donnée globale fournie par le voteur est la donnée "Vrai";

A la ligne suivante, un canal est erroné et fournit au voteur la donnée "Faux". Cette dernière est qualifiée comme erronée par le voteur car elle est minoritaire. Le voteur fournit alors la donnée "Vrai" comme donnée globale.

A la ligne suivante, un canal est perdu. Les deux données individuelles reçues par le voteur sont "Vrai". Il en est donc de même pour la donnée globale.

A la ligne suivante, deux canaux sont erronés et fournissent donc au voteur la donnée "Faux". Ce dernier les qualifie de valides car elles sont majoritaires et fournit donc la donnée "Faux" comme donnée globale.

Au-dessous, deux canaux sont perdus et le voteur reçoit seulement la donnée "Vrai". C'est cette dernière qu'il fournit comme donnée globale.

Ensuite, un canal est erroné et un autre perdu. Le voteur reçoit donc seulement la donnée "Vrai" et la donnée "Faux". Il n'est pas en mesure de les qualifier et ne peut donc pas fournir de donnée globale.

Dans la même situation, on prévoit ensuite un premier cas de logique de poursuite. Le voteur qualifie de valide la donnée "Vrai" et met donc cette dernière comme donnée globale.

Dans le deuxième cas de logique de poursuite à la dernière ligne, le voteur qualifie de valide la donnée "Faux" et fournit cette dernière comme donnée globale.

Comme on le voit dans ces deux tableaux, les conséquences d'échecs multiples dans le système dépendent du type de données individuelles utilisées. Par exemple, avec une architecture à quatre applications, si les données individuelles peuvent prendre plusieurs valeurs (comme dans le cas de données numériques), deux applications peuvent envoyer au voteur des données erronées qui ne sont pas identiques. Ainsi, si la donnée correcte est "10", une des données individuelles envoyées peut être à "8" et l'autre à "13". Dans ce cas, il n'y a pas d'égalité de votes (deux applications ont envoyé la donnée "10", une a envoyé la donnée "8" et la dernière a envoyé la donnée "13"). Le voteur sera donc en mesure de fournir parfois la donnée correcte. Mais si les données individuelles peuvent prendre seulement deux valeurs (comme dans le cas de données de type booléen), les deux applications erronées enverront au voteur la même donnée erronée. Il y aura donc égalité des votes de sorte que le voteur ne sera pas en mesure de choisir la bonne solution. Sachant que l'impact des données erronées est pire en présence de données booléennes qu'en présence d'autres types de données, nous considérerons de plus près le cas dans la suite. Il est entendu toutefois que l'invention n'est pas restreinte à ce type de données.

Conditions d'échec pour une architecture à quatre canaux.

Nous allons de même envisager le cas d'un système à quatre canaux, dans le tableau 4 ci-dessous.

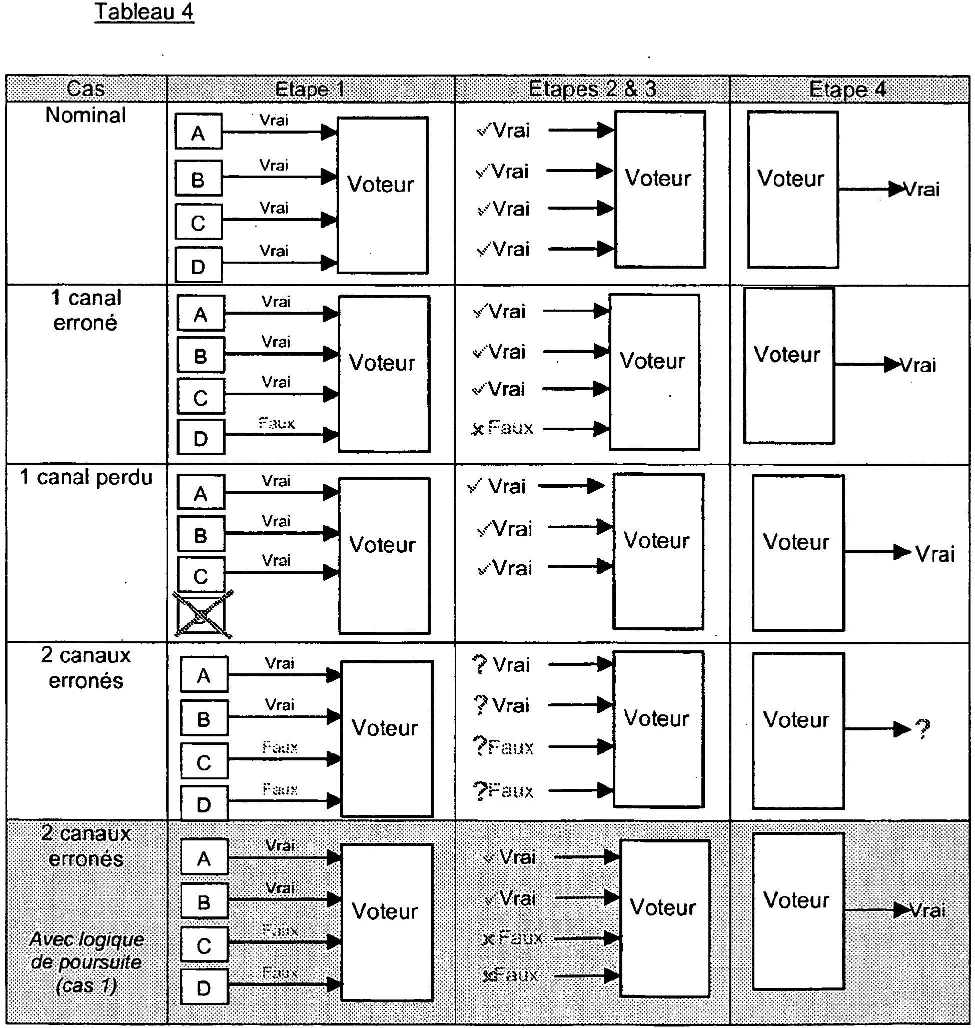

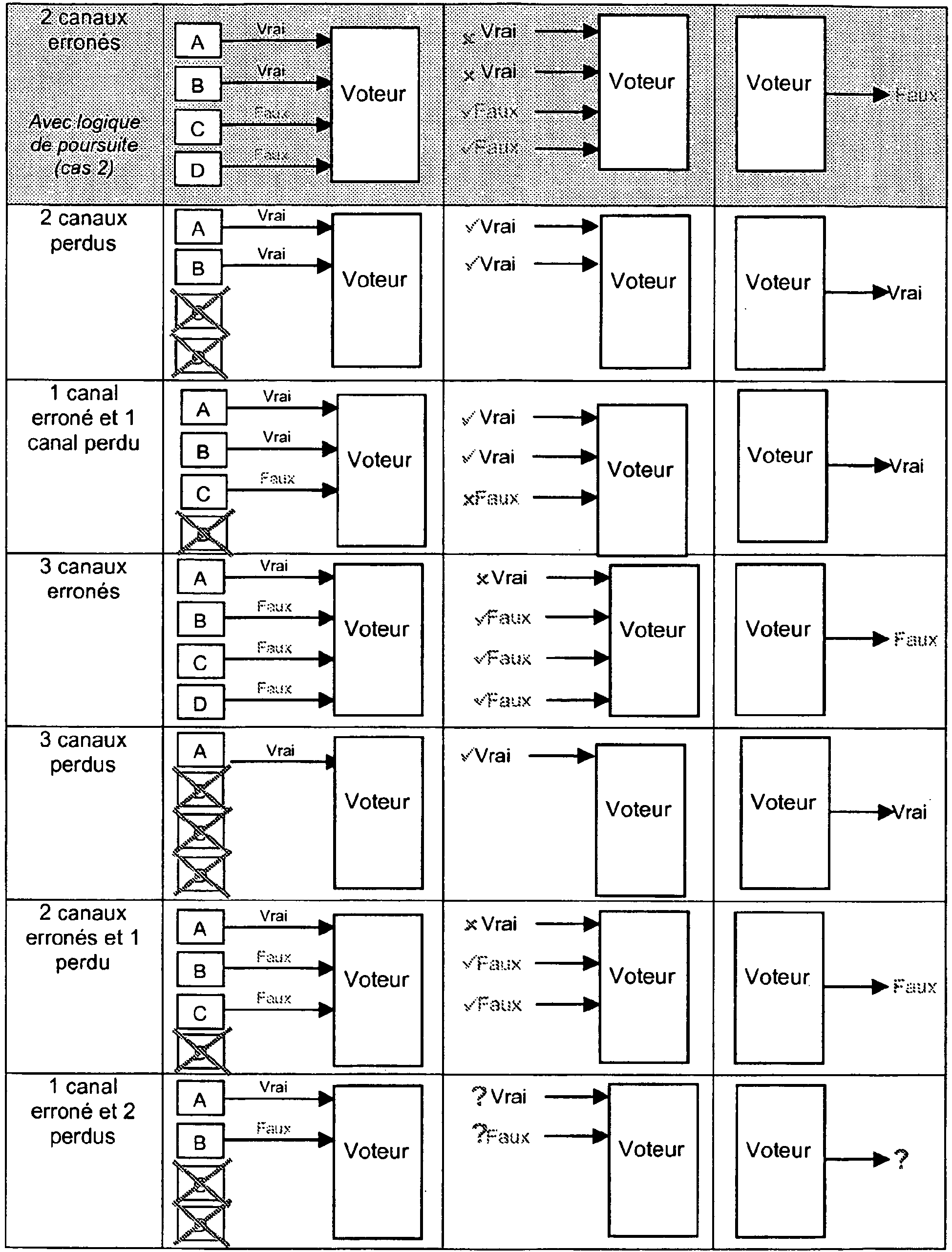

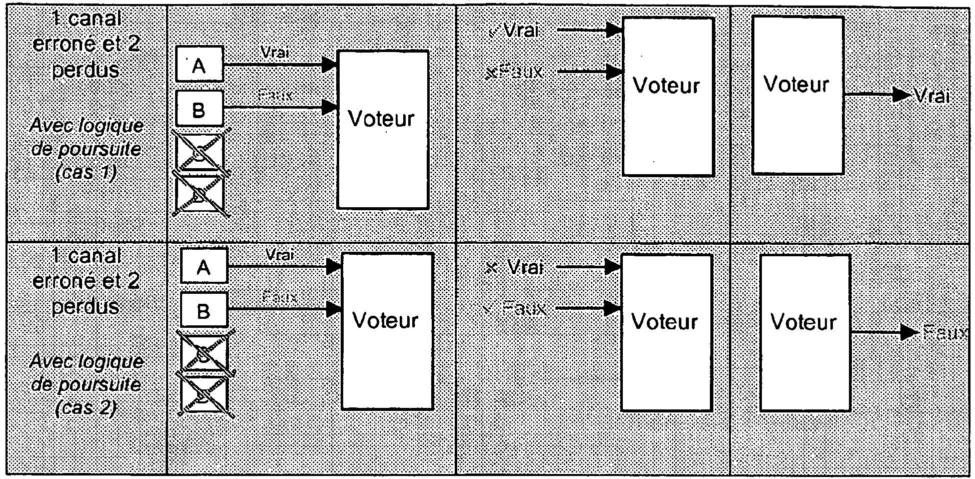

Dans le cas nominal, les quatre canaux fournissent comme donnée individuelle la donnée "Vrai" de sorte que le voteur fournit comme donnée globale la donnée "Vrai" qui correspond à la réalité.

A la ligne suivante, un canal est erroné, il fournit la donnée "Faux". Identifié comme minoritaire par le voteur, il se voit qualifié de non valide. Le voteur transmet donc la donnée globale "Vrai".

A la ligne suivante, un canal est perdu. En présence des trois données "Vrai", le voteur donne la même donnée globale.

A la quatrième ligne, deux canaux sont erronés et fournissent la donnée "Faux". Le voteur reçoit donc deux fois la donnée "Vrai" et deux fois la donnée "Faux". En présence d'une telle égalité de votes, il n'est pas en mesure de fournir une donnée globale.

A la ligne suivante, un premier cas de logique de poursuite est envisagé pour pallier à cette situation. Grâce à cette logique, le voteur qualifie de valides les données "Vrai" fournies par les deux premières applications et fournit donc comme donnée globale la donnée "Vrai".

Dans l'autre cas de logique de poursuite, le voteur fait le choix inverse en validant les données individuelles fournies par les canaux erronés et fournit donc la donnée globale "Faux".

A la ligne suivante, deux canaux sont perdus. Le voteur reçoit donc seulement deux données "Vrai" et fournit une donnée globale identique.

Ensuite, un canal est erroné et un autre est perdu. Le voteur reçoit deux données "Vrai" et une donnée "Faux". Il qualifie cette dernière d'invalide en raison de son caractère minoritaire et fournit donc la donnée "Vrai" comme donnée globale.

A la ligne suivante, trois canaux sont erronés. Le voteur reçoit donc une donnée "Vrai" et trois données "Faux". Ces dernières étant majoritaires, il les qualifie comme valides et fournit donc "Faux" comme donnée globale.

Ensuite, trois canaux sont perdus. La seule donnée reçue par le voteur est "Vrai" de sorte qu'il en constitue la donnée globale.

Ensuite, deux canaux sont erronés et un canal est perdu. Le voteur reçoit donc une fois la donnée "Vrai" et deux fois la donnée "Faux". Ces dernières étant majoritaires, la donnée globale est fournie comme "Faux".

Dans le cas où un canal est erroné et deux canaux sont perdus, le voteur reçoit une fois la donnée "Vrai" et une fois la donnée "Faux". En présence d'une telle égalité de votes, il n'est pas en mesure de fournir une donnée globale.

Dans la même situation et en présence d'un premier cas de logique de poursuite, le voteur qualifie de valide la donnée "Vrai" et transmet donc "Vrai" comme donnée globale. Mais, dans le cas d'un deuxième type de logique de poursuite illustré à la dernière ligne du tableau, c'est la donnée "Faux" que le voteur valide et transmet donc comme donnée globale.

### Généralisation des conditions d'échec pour une architecture à n canaux

Il est facile de généraliser la question par analogie à une architecture à n canaux. En effet, un échec conduisant à la perte d'un canal rend la situation identique à celle d'une architecture ayant n-1 canaux.

Ainsi, un système de vote basique sait convenablement faire face aux situations d'échec lorsqu'elles se traduisent par la fourniture de la donnée "Vrai" par une majorité de canaux. En revanche, il est nécessaire de faire un choix d'architecture logique pour faire face aux échecs qui conduisent à une situation d'égalité de votes, c'est-à-dire une situation dans laquelle le voteur fait face à un nombre égal de "Vrai" et de "Faux". Enfin, le système de vote n'est pas en mesure de faire face à des situations d'échec qui conduisent à la réception d'une majorité de "Faux" de la part des canaux.

On voit ainsi que ce type d'architecture est suffisamment robuste pour supporter certaines situations d'échec où une minorité de canaux est erronée ou perdue. Mais il ne donne pas satisfaction dans les situations d'échec conduisant à une égalité de votes.

Les documents FR- 2 916290 et FR-2850 356 divulgant des procédés de commande d'aéronef mettant en oeuvre la détermination de donnés.

### Présentation de l'invention

Un but de l'invention est de réaliser un système de vote qui supporte un plus grand nombre de cas d'échec au sein des applications. De préférence, il s'agira de pouvoir fournir une donnée globale dans un plus grand nombre de situations et que ces données soient plus souvent conformes à la réalité.

A cet effet, on prévoit selon l'invention un procédé de commande d'un aéronef, dans lequel un dispositif met en oeuvre les étapes consistant à :
- déterminer une première donnée globale à partir de certaines seulement parmi des premières données individuelles calculées par des applications respectives ;
- modifier au moins un paramètre pour prendre en compte un déroulement de l'étape de détermination ; et
- déterminer une deuxième donnée globale à partir de deuxièmes données individuelles calculées par les applications respectives et à partir du ou des paramètres.

Ainsi, on prend en compte le déroulement d'au moins une étape de détermination précédente pour améliorer le déroulement d'au moins une étape de détermination suivante. Le vote se fait donc en tenant compte de l'historique des votes. Il devient alors possible de faire face à une situation d'égalité de votes, et de surcroît d'y faire face en fournissant une donnée globale fiable.

Par ailleurs, sachant que le système sait traiter une situation d'égalité de votes, l'invention a pour avantage supplémentaire de rendre possible l'utilisation d'un nombre de canaux, c'est-à-dire d'un nombre d'applications, de type pair. On peut alors héberger deux applications au sein du même calculateur. Par exemple, il est plus avantageux de disposer de deux calculateurs hébergeant un total de quatre applications plutôt que d'héberger trois applications dans trois calculateurs respectifs.

Avantageusement, la première donnée globale est identique à une majorité, de préférence absolue, des premières données individuelles.

Ainsi, la modification du paramètre pour prendre en compte le déroulement de l'étape de détermination a lieu si cette dernière a fait ressortir une situation de majorité et de préférence uniquement si cette condition est remplie. Ainsi, ce sont les situations réputées les plus fiables qui seront utilisées pour constituer l'historique pris en compte lors des étapes de détermination suivantes.

De préférence, la première étape de détermination est mise en oeuvre sans prendre en compte le ou les paramètres.

Ainsi, on modifie le paramètre pour prendre en compte le déroulement d'une étape de détermination si, au cours de cette dernière, aucun paramètre n'a été pris en compte. C'est donc encore une fois les situations les plus saines qui sont retenues pour influencer les situations suivantes.

Avantageusement, le ou chaque paramètre est un coefficient de pondération affecté à l'une des applications.

De préférence, lors de l'étape de modification, le dispositif modifie le ou chaque paramètre associé à l'une des applications ayant calculé une première donnée individuelle différente de la première donnée globale et de préférence laisse inchangé le ou chaque autre paramètre.

Avantageusement, au cours de l'étape de modification, on modifie le ou chaque paramètre à modifier en le multipliant par un facteur prédéterminé, de préférence indépendant du paramètre et/ou du nombre de modifications déjà faites sur le paramètre.

Avantageusement, on met en oeuvre l'étape de modification sans prévoir de borne pour le paramètre.

Avantageusement, on met en oeuvre le procédé seulement lors d'une phase prédéterminée du fonctionnement de l'aéronef.

De préférence, lors de la deuxième étape de détermination, les données individuelles sont telles que, soit elles sont au nombre de deux et différentes l'une de l'autre, soit elles peuvent être réparties en groupes de données, les données d'un même groupe étant identiques entre elles et différentes de celles des autres groupes, les groupes ayant le cardinal le plus élevé étant au moins au nombre de deux et ayant même cardinal.

Ainsi, on fait intervenir le ou les paramètres reflétant l'historique si on se trouve en présence d'une égalité de votes et donc en l'absence d'une situation de majorité. De préférence, c'est seulement dans ce type de situation qu'on fait intervenir le ou les paramètres.

Avantageusement, on réinitialise les paramètres à l'issue d'une phase prédéterminée de fonctionnement de l'aéronef.

On prévoit également selon l'invention un programme d'ordinateur comprenant des instructions de code aptes à commander l'exécution du procédé selon l'invention lorsqu'il est exécuté sur un ordinateur. On prévoit aussi selon l'invention un support d'enregistrement de données comprenant un tel programme sous forme enregistrée, ainsi que la mise à disposition d'un tel programme sur un réseau de télécommunications en vue de son téléchargement.

On prévoit également selon l'invention un dispositif de commande d'un aéronef, le dispositif étant apte à :
- déterminer une première donnée globale à partir de certaines seulement parmi des premières données individuelles calculées par des applications respectives ;
- modifier au moins un paramètre pour prendre en compte un déroulement de l'étape de détermination ; et
- déterminer une deuxième donnée globale à partir de deuxièmes données individuelles calculées par les applications respectives et à partir du ou des paramètres.

On prévoit en outre selon l'invention un système de commande d'un aéronef, comprenant un tel dispositif et des applications aptes à fournir les données individuelles au dispositif, le nombre d'applications étant de préférence pair.

On prévoit également selon l'invention un aéronef comprenant un tel dispositif ou un tel système.

D'autres caractéristiques et avantages de l'invention apparaîtront encore dans la description suivante d'un mode préféré de réalisation et de variantes donnés à titre d'exemples non limitatifs en référence aux dessins annexés sur lesquels :
- la figure 1 est une vue en perspective d'un avion à bord duquel est mis en oeuvre le procédé selon l'invention ; et
- la figure 2 est un schéma d'un système de vote de l'avion de la figure 1, mettant en oeuvre le procédé de l'invention.

### Présentation générale de l'exemple

Dans le présent exemple, l'engin 2, à bord duquel est mis en oeuvre le procédé de l'invention, est un aéronef et plus précisément un avion comprenant un fuselage 4, deux ailes 6 et des réacteurs 8, ici au nombre de deux.

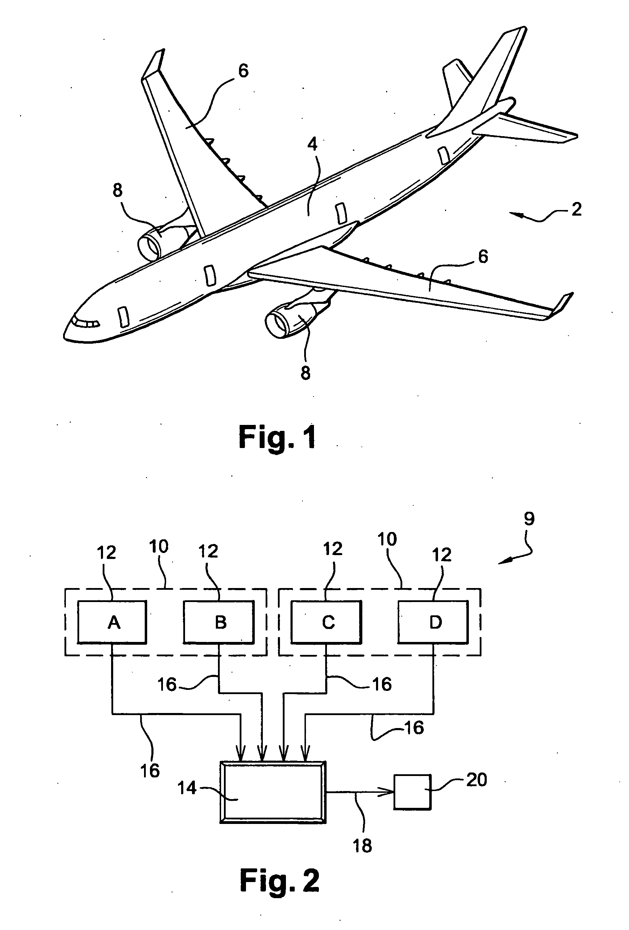

Cet avion comprend des ordinateurs de bord aptes à assurer, au moins dans certaines circonstances tout ou partie de la commande de l'appareil. La commande peut aussi être assurée en tout ou partie par un ou plusieurs pilotes de l'appareil. Nous allons présenter, en référence à la figure 2 dans la suite, un système de vote 9 de l'avion 2 comprenant certains de ces ordinateurs.

On a ainsi illustré à la figure 2 deux ordinateurs ou calculateurs 10 hébergeant chacun deux applications logicielles 12 qui sont donc au total au nombre de quatre. Le système comprend en outre un dispositif 14 tel qu'un ordinateur hébergeant une application qui assure la fonction de voteur ou d'organisateur du vote. Les calculateurs 10 et le voteur 14 sont agencés de sorte que ce dernier peut recevoir des données 16, dites ici "individuelles", fournies par les applications 12 respectives. Ces données sont déterminées, par exemple calculées, par chacune de ces applications à partir de données de base obtenues en amont (par calcul, par mesure, ou de la part d'un autre organe, etc.). A l'issue du vote dans le cadre du procédé qui sera présenté, le voteur 14 fournit une donnée 18, dite ici "globale", à un dispositif 20 de l'appareil qu'il utilisera pour la commande de fonctions techniques de l'avion.

Comme on va le voir, le procédé de l'invention permet d'améliorer de façon dynamique les résultats du vote. Ainsi, les résultats de précédents votes sont pris en compte pour améliorer la fiabilité de votes ultérieurs mettant en oeuvre les mêmes applications. On utilise ainsi l'historique des votes pour mieux identifier la ou les applications dont le comportement est défectueux, suspect ou encore moins bon que celui des autres applications. Le procédé permet ainsi de détecter et de prendre en compte le comportement erratique d'une application, même si ce comportement n'est pas continu.

Dans la suite de la description, nous considérerons à titre d'exemple que le vote devrait normalement aboutir à la donnée globale "Vrai". Par conséquent, les applications qui fournissent la donnée individuelle "Faux" ne fonctionnent pas correctement, au contraire que celles qui fournissent la donnée individuelle "Vrai".

Pour tenir compte de l'historique, le procédé met en oeuvre, dans certains cas, une étape supplémentaire par rapport aux quatre étapes présentées plus haut. Il s'agit de l'étape de mémorisation. Le voteur 14 met donc en oeuvre les étapes suivantes par principe :
- étape 1 : lecture des données individuelles 16 fournies par chaque application 12 ;
- étape 2 : comparaison des données individuelles (dans le cas nominal, tous ces résultats sont concordants car les applications 12 ont utilisé les mêmes données de base et obéissent à la même logique) ;
- étape 3 : élimination des données individuelles erronées. On conserve seulement certaines des données individuelles parce qu'elle sont majoritaires, à défaut parce qu'on tient compte de l'historique des votes de chaque application comme expliqué plus bas ;
- étape 4 : mémorisation de la validité des résultats fournis en affectant différents paramètres tels que des coefficients de pondération aux applications ayant fourni une donnée erronée et/ou à celles ayant fourni une donnée correcte (voir plus bas) ;
- étape 5 : transfert de la donnée globale 18 constituant le résultat de la fonction au dispositif 20 pour sa prise en compte dans le processus de commande.

On peut prévoir que l'historique utilisé pour aider à sélectionner les applications qui ont fourni des données correctes est construit à partir de chaque vote ou de certains d'entre eux seulement.

Lors de chaque vote, le voteur détermine tout d'abord s'il existe un groupe de données majoritaires par rapport à l'autre. Dans le présent exemple, il retiendra comme valides les données majoritaires pour déterminer la donnée globale 18 et ne fera pas à ce stade usage de données relatives à l'historique des votes pour cette détermination.

Le procédé selon l'invention est surtout utile dans les situations où il n'y a pas de majorité. Il peut s'agir d'une situation d'égalité de vote dans laquelle les données individuelles reçues sont au nombre de deux et différentes l'une de l'autre. Il peut s'agir aussi d'une situation dans laquelle les données individuelles peuvent être réparties en groupes de données, les données d'un même groupe étant identiques entre elles et différentes de celles des autres groupes, les groupes ayant le cardinal le plus élevé étant au nombre de deux et ayant même cardinal. Si un ou plusieurs paramètres reflétant l'historique des votes est disponible, le poids de chaque résultat est déterminé en effectuant l'addition des poids correspondant aux applications qui ont fourni ce résultat. Ainsi, c'est le résultat ayant le poids total le plus faible ou le plus lourd qui est finalement retenu pour constituer la donnée globale 18. Selon les cas, un paramètre lourd ou léger a été associé à une application 18 dont la voix a été discréditée lors d'un ou plusieurs votes antérieurs. Par conséquent, selon ce principe, le procédé selon l'invention est capable de faire face à une telle situation d'égalité de voix.

Dans une situation où il n'y a ni majorité ni historique de votes disponibles (par exemple lorsque tous les paramètres sont à leur valeur initiale et donc égaux), le voteur 14 se trouve dans une situation où il doit trancher en utilisant un autre type de logique. Une telle logique peut par exemple être celle de la logique du pire des cas, que l'on présentera plus bas. Naturellement, le choix de la bonne logique doit être effectué en fonction des nécessités, qui dépendent elles-mêmes du domaine d'application du système de vote. Ce choix peut obéir par exemple à des contraintes de certification ou de fiabilité.

Chaque opération de vote nécessite que l'application fournisse sa voix constituée par la donnée individuelle à un moment donné ou dans une période donnée. Dès lors, il est possible qu'une des applications 12 manque ce rendez-vous et soit ainsi considérée comme perdue par le voteur 14. Elle serait alors considérée comme non fiable lors de la prise en compte de l'historique. Pour éviter une telle prise en compte injustifiée, on peut prévoir dans le voteur une certaine tolérance à la fourniture retardée des résultats. Une autre solution consiste à prévoir une étape de synchronisation des applications pour éviter de tels retards.

### Choix des modalités pratiques

Il existe de nombreuses possibilités pour décider selon quelles modalités les paramètres ou poids doivent être affectés, modifiés, mis à jour et réinitialisés et de quelle façon les paramètres influent sur l'étape de validation des applications par le voteur. Ces modalités peuvent être choisies en fonction du domaine d'application ou de la fonction remplie par exemple.

On peut d'abord décider quels sont les paramètres qui seront affectés par un vote, c'est-à-dire ceux qui seront changés par le voteur à l'issue du vote. Il existe différentes possibilités :
- une philosophie de poids négatifs : dans le cas nominal, on ne modifie aucun des poids car tous les canaux donnent des résultats concordants. Mais dès que l'un d'eux s'avère défaillant, le résultat qu'il fournit diffère de la majorité des autres résultats et c'est donc son poids qui sera modifié par le voteur ;
- une philosophie du poids positif: dans le cas nominal, tous les poids sont modifiés de la même façon car les applications donnent toutes des résultats concordants. Mais dès que l'une d'elle est défaillante, son résultat diffère de celui de la majorité et le voteur ne modifiera donc pas le poids de cette application ;
- une philosophie (mixte) des poids positifs et négatifs: dans le cas nominal, les poids changent tous de la même façon car les applications donnent toutes des résultats concordants. Mais dès que l'une d'elles est corrompue, son résultat diffère de celui de la majorité des autres résultats. Le poids de cette application discordante sera donc modifié de façon opposée à la modification qui est appliquée aux poids des autres applications. Par exemple, si les poids sont augmentés dans le cas nominal, l'application erronée verra son poids diminuer.

On peut aussi se demander à quel moment il convient de modifier les poids. C'est seulement après un vote que peut intervenir la mise à jour ou la modification des poids. Mais il n'y a pas d'obligation d'effectuer cette modification après chaque vote. On distingue ici encore deux philosophies :
- selon la philosophie de la mise à jour systématique, les poids sont modifiés après chaque vote et prennent donc en compte l'historique de tous les votes ;
- selon la philosophie de la modification en cas de majorité, les poids ne sont modifiés que si le dernier vote n'a pas nécessité la prise en compte du ou des poids, c'est-à-dire la prise en compte de l'historique, compte tenu de l'existence d'une majorité. Cette philosophie évite de mémoriser des erreurs provenant d'une mauvaise interprétation de l'historique des votes.

En outre, les calculateurs de l'avion ne démarrant pas instantanément, il existe une période dite d'initialisation ou d'allumage. Or certains calculateurs ou certaines applications peuvent fonctionner lors d'une phase d"'allumage" de sorte que les données qu'ils seraient susceptibles de fournir au reste de leur environnement ne seraient pas à jour et seraient donc erronées. Des discordances entre les canaux pourraient donc apparaître. Ces discordances ne doivent pas être mémorisées car elles ne résultent pas d'une défaillance. C'est pourquoi, lors de cette période, on fait en sorte qu'ils n'envoient pas de données et soient donc "inactifs" du point de vue de leur environnement. Dans ce cas, il est avantageux de prévoir une phase nominale dans le procédé au cours de laquelle tous les canaux participent au vote. En dehors de cette phase, des votes peuvent être réalisés mais ils ne sont pas pris en compte pour la mémorisation de l'historique.

Par ailleurs, lorsque certains canaux sont coupés ou éteints (par exemple lorsqu'une application a subi une commande de mise à l'arrêt), leurs poids ne doivent pas être mis à jour en raison de leur absence de fourniture de bons résultats. De fait, ils ne fournissent aucun résultat. Ces canaux devraient être supprimés lors de la computation des votes et des résultats aussi longtemps qu'ils demeurent éteints ou inactifs.

Par ailleurs, il existe différentes façons de modifier les paramètres.

On peut d'abord choisir entre réduction ou augmentation : cette pratique, associée aux philosophies de poids négatifs ou de poids positifs, permet de définir si ce sont les canaux de plus fort poids ou de plus faible poids qui seront jugés comme fiables en cas d'égalité de votes. Dans ces cas, on augmente ou on réduit respectivement le paramètre si le canal est jugé fiable.

On peut aussi choisir entre modification incrémentale (ou pas à pas) ou géométrique (par coefficient). On peut ainsi décider de modifier le paramètre en l'augmentant ou en le diminuant d'un incrément ou bien en le multipliant par un facteur. (Incrément et facteur seront de préférence constants et invariables.) Dans le premier cas, on augmente ou on diminue le poids d'un incrément, tandis que dans le second on lui applique un coefficient. Ce choix a des conséquences sur la variabilité de l'amplitude de chaque augmentation ou de chaque diminution de paramètre. Ces deux possibilités ont leurs propres limites. La modification incrémentale est limitée par les valeurs maximales ou minimales qui peuvent être enregistrées. La modification géométrique est limitée par la précision de la mémoire du voteur. Il sera donc important de choisir celle des modalités qui restreint le moins le système en fonction des caractéristiques de sa mémoire physique.

Il s'agit aussi de choisir si l'on modifie les paramètres en restant dans une gamme prédéterminée ou, au contraire, sans aucune limitation. Il s'agit donc de choisir si chaque paramètre restera dans une gamme prédéterminée et donc cessera d'augmenter ou de diminuer lorsqu'il atteint l'une des bornes de la gamme, ou bien s'il peut croître ou décroître sans limite.

Il existe aussi différentes modalités de réinitialisation des paramètres. S'agissant par exemple de coefficients de pondération, cette réinitialisation peut consister à remettre tous les coefficients à la valeur 1.

La question de la réinitialisation se pose en particulier si des tâches de maintenance sont effectuées. En effet, des travaux de maintenance peuvent avoir lieu pour pallier à la perte d'un canal ou à sa corruption. Une telle tâche visera par exemple à remplacer ce canal par un nouveau canal. Il s'agira par exemple de remplacer un ou plusieurs capteurs, de remplacer le calculateur qui héberge l'application, de remplacer un moyen de communication de l'application avec un réseau de bord ou encore de remplacer des connecteurs ou des mémoires. Dans le cadre de cette maintenance, il peut s'agir aussi de mettre à jour un logiciel, d'y ajouter un patch ou complément, ou encore de remplacer le logiciel par un autre. Si une telle opération de maintenance a lieu, il est préférable de supprimer l'historique du canal ayant subi la maintenance. En effet, les causes des sorties erronées qui ont conduit à une différence de poids sont maintenant supprimées.

En dehors des opérations de maintenance, il peut exister d'autres situations, en fonction du domaine d'application de la fonction, qui conduisent à réinitialiser les paramètres.

Par exemple, s'agissant d'un aéronef, on peut prévoir de réinitialiser automatiquement tous les paramètres lors de la clôture d'un vol. Une telle réinitialisation peut aussi avoir lieu à la fin d'une phase de vol prédéterminée. On sait en effet que des phases de vol sont prévues à bord pour améliorer les opérations de vol. On peut donc prévoir que la fin d'une phase de vol entraîne la réinitialisation des poids des canaux. Prévoir une réinitialisation automatique des canaux permet d'éviter d'omettre d'y procéder si celle-ci devait être commandée uniquement sur un mode manuel, c'est-à-dire sous l'effet d'une commande par un opérateur ou un pilote.

Nous allons maintenant, en référence au tableau 5, illustrer la mise en oeuvre du procédé de l'invention. Pour examiner les effets de l'échec d'une application, nous allons considérer deux types d'architecture avant de généraliser à un nombre quelconque de canaux. Dans ces cas, nous simplifions l'étude en considérant que les canaux ne fournissent que des données individuelles de type booléen. Naturellement, l'invention s'applique également à des données de type différent, par exemple des données numériques.

En outre, nous ne considérerons pas l'hypothèse du comportement erratique simultané de deux canaux sans que l'un d'eux ait d'abord présenté au préalable un échec. Ainsi, nous considérons que, en cas d'égalité durant le vote, il existe une différence de poids entre les canaux. L'hypothèse ainsi laissée de côté ici est celle de l"'égalité sans historique" et présente une probabilité d'occurrence très faible. Nous supposons que le résultat normal attendu ou correspondant à la réalité est "vrai".

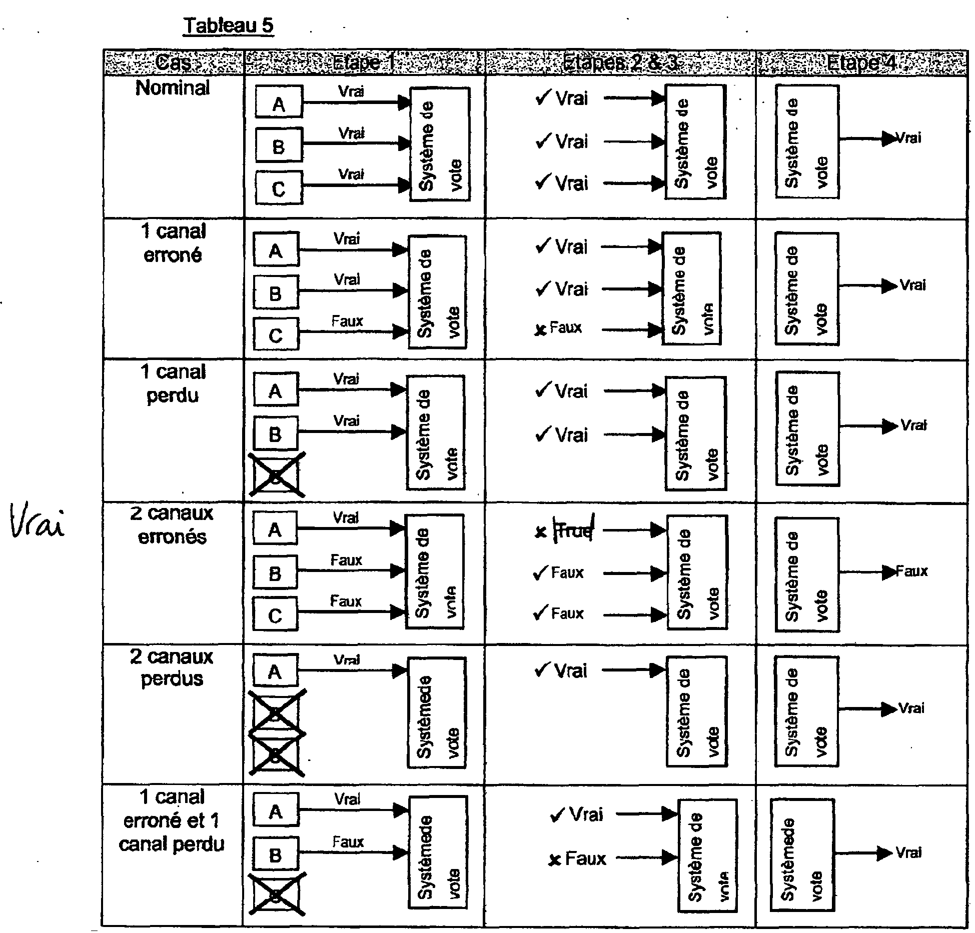

Dans le cas nominal, tous les canaux 12 fournissent la donnée individuelle 16 "Vrai". La même donnée est fournie par le voteur 14 comme donnée globale 18.

A la deuxième ligne, si un canal est erroné et fournit la donnée "Faux", cette dernière est identifiée comme minoritaire par le voteur et ainsi invalidée. Le voteur fournit donc la donnée globale "Vrai".

Si un canal est perdu, le voteur ne reçoit que les deux données individuelles "Vrai" et fournit donc une donnée globale identique.

Si deux canaux sont erronés, le voteur reçoit une fois la donnée individuelle "Vrai" et deux fois la donnée individuelle "Faux". Ces dernières étant majoritaires, il les valide et fournit la donnée globale "Faux".

Si deux canaux sont perdus, le voteur reçoit seulement une fois la donnée "Vrai". Il la valide et fournit la donnée globale "Vrai".

Enfin, à la dernière ligne, si un canal est erroné et un canal est perdu, le voteur reçoit une fois la donnée individuelle "Vrai" et une fois la donnée individuelle "Faux". On se trouve donc en présence d'une égalité de votes. Grâce à la prise en compte de l'historique des votes, comme on le verra en détail plus bas, le voteur 14 peut déterminer que la donnée "Vrai" doit être validée tandis que la donnée "Faux" doit être disqualifiée. Il fournit donc la donnée globale "Vrai".

Dans le tableau 6 ci-dessous, on examine des cas analogues dans une architecture à quatre canaux.

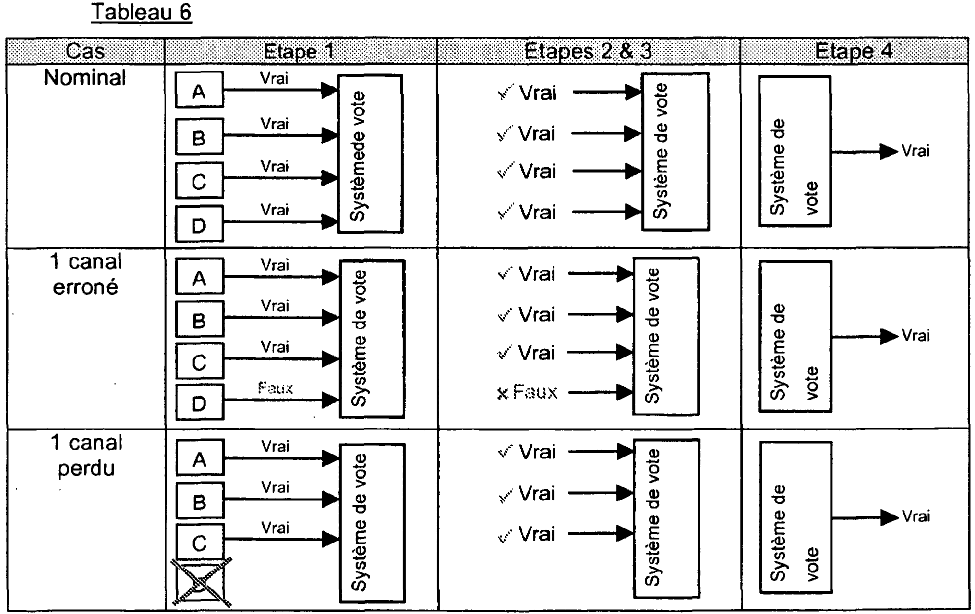

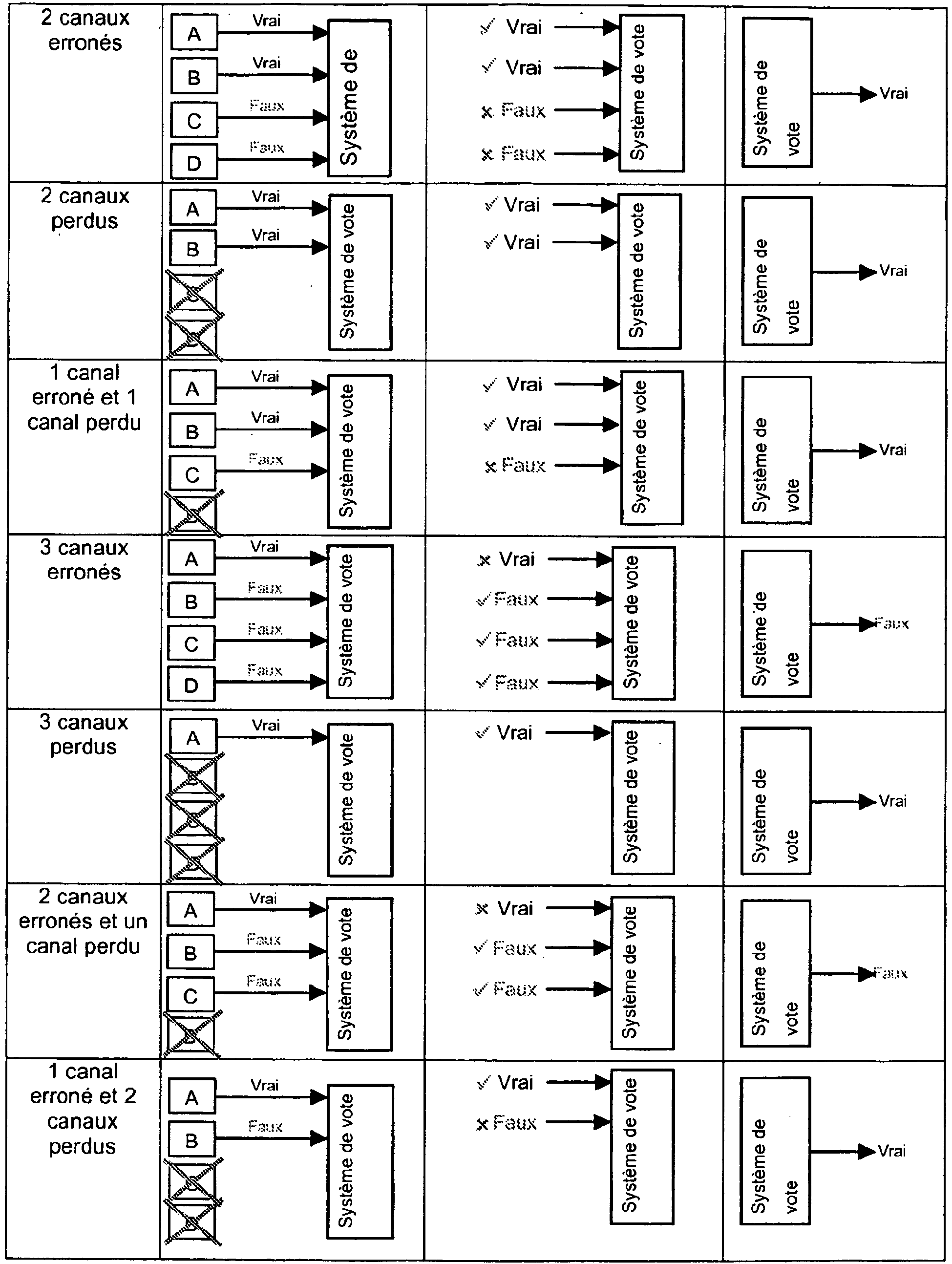

Dans le cas nominal, le voteur 14 qui a reçu quatre fois la donnée individuelle 16 "Vrai" fournit la donnée globale 18 "Vrai";

A la deuxième ligne, un canal est erroné et fournit, contrairement aux autres, la donnée "Faux" au voteur. La donnée "Vrai" étant majoritaire, la donnée globale fournie est "Vrai".

Si un canal est perdu, le voteur reçoit trois fois la donnée individuelle "Vrai" et fournit la même donnée comme donnée globale.

Si deux canaux sont erronés, le voteur reçoit deux fois la donnée individuelle "Vrai" et deux fois la donnée individuelle "Faux". Grâce à la prise en compte de l'historique des votes, il est en mesure d'identifier les données "Vrai" comme valides contrairement aux données "Faux" et fournit donc la donnée globale "Vrai".

Si deux canaux sont perdus, le voteur reçoit deux fois la donnée individuelle "Vrai" et fournit la même donnée comme donnée globale.

Si un canal est erroné et un canal est perdu, le voteur reçoit deux fois la donnée individuelle "Vrai" et une fois la donnée individuelle "Faux". Cette dernière étant minoritaire, il fournit la donnée globale "Vrai".

Si trois canaux sont erronés, le voteur reçoit une fois la donnée individuelle "Vrai" et trois fois la donnée individuelle "Faux". Ces dernières étant majoritaires, le voteur transmet la donnée globale "Faux".

Si trois canaux sont perdus, le voteur ne reçoit que la donnée individuelle "Vrai" et fournit la même donnée comme donnée globale.

Si deux canaux sont erronés et un canal est perdu, le voteur reçoit deux fois la donnée "Faux" et une fois la donnée "Vrai". La donnée "Faux" étant majoritaire, c'est la même donnée qui est fournie comme donnée globale.

Enfin, si un canal est erroné et deux canaux sont faux, le voteur reçoit une fois la donnée "Vrai" et une fois la donnée "Faux". En présence d'une telle égalité de votes et grâce à la prise en compte de l'historique, le voteur transmet la donnée globale "Vrai".

On peut facilement généraliser par analogie le fonctionnement du procédé dans le cas d'une architecture à n canaux. Ainsi, dans une architecture à n canaux, une situation d'échec où un canal est perdu est équivalente à celle d'une architecture à n - 1 canaux.

Le procédé selon l'invention sait faire face aux échecs qui conduisent à une majorité de votes "Vrai" avec une minorité de votes "Faux". Mais surtout, le procédé sait aussi faire face aux échecs qui conduisent à une égalité de votes (même nombre de "Vrai" et de "Faux") grâce à la prise en compte de l'historique. Comme précédemment, le procédé ne donne pas de réponse correcte si les échecs conduisent à une majorité de voix "Faux". On voit donc que le procédé selon l'invention sait faire face aux mêmes situations d'échec que celles déjà convenablement traitées par un système de vote classique. Mais en outre, il sait faire face à une situation d'égalité de votes.

En retour, il devient possible d'utiliser une architecture où le nombre de canaux est pair. On peut donc prévoir un nombre de calculateurs égal à la moitié du nombre d'applications, chaque calculateur hébergeant deux applications.

Nous allons maintenant présenter un exemple concret de mise en oeuvre de l'invention à bord de l'avion 2 et au moyen du système illustré à la figure 2. A bord d'un tel appareil, on sait qu'il existe un système qui surveille la plupart des principaux systèmes de bord. Il s'agit du système d'alerte de vol. Son architecture est conforme à celle illustrée à la figure 2 et met en oeuvre un système de vote à plusieurs instances 12. Il n'est pas exclu que durant le vol des problèmes de matériel frappent au moins l'un des calculateurs hébergeant ce système. Une telle avarie peut entraîner le déclenchement d'une alerte fortuite et la mise en oeuvre à bord de mesures inutiles susceptibles elles-mêmes de réduire les performances de vol ou l'autonomie de l'avion en carburant. Dans le présent exemple, chacune des applications 12 est un module de détection de pannes sur un des principaux systèmes de l'avion.

Ici, et conformément aux indications données plus haut, on choisit de mettre en oeuvre la philosophie du poids négatif et la mise à jour des paramètres uniquement en présence d'une inégalité de votes. Les paramètres sont des coefficients de pondération affectés aux applications 12 respectives et peuvent varier sans aucune borne prédéterminée. Chaque fois qu'un coefficient est modifié, il est multiplié par un facteur égal ici à 0,9, ce qui implique qu'il décroît. Enfin, les poids sont réinitialisés au début de la dernière phase de vol.

Les étapes du procédé sont illustrées dans le tableau 7 ci-dessous. Chaque ligne illustre le déroulement d'une opération de prise de décision en plusieurs étapes illustrées sur les quatre colonnes. Il ne s'agit pas, contrairement au précédent tableau, d'une étude de cas. En effet, les situations des lignes 1 à 4 se présentent successivement et par ordre chronologique dans le déroulement qui nous sert ici d'exemple. Ce tableau forme donc un scénario.

Les quatre canaux de l'architecture de la figure 2 sont identifiés par les lettres A, B, C et D. Le terme "Valide" signifie que le canal en question n'a détecté aucune panne sur les systèmes qu'il surveille. Le terme "Panne" signifie au contraire que le canal a détecté l'existence d'une panne sur un des systèmes surveillés. On suppose dans ce scénario qu'aucune panne n'est en fait survenue. Par conséquent, chaque détection d'une panne n'est qu'une alarme fortuite.

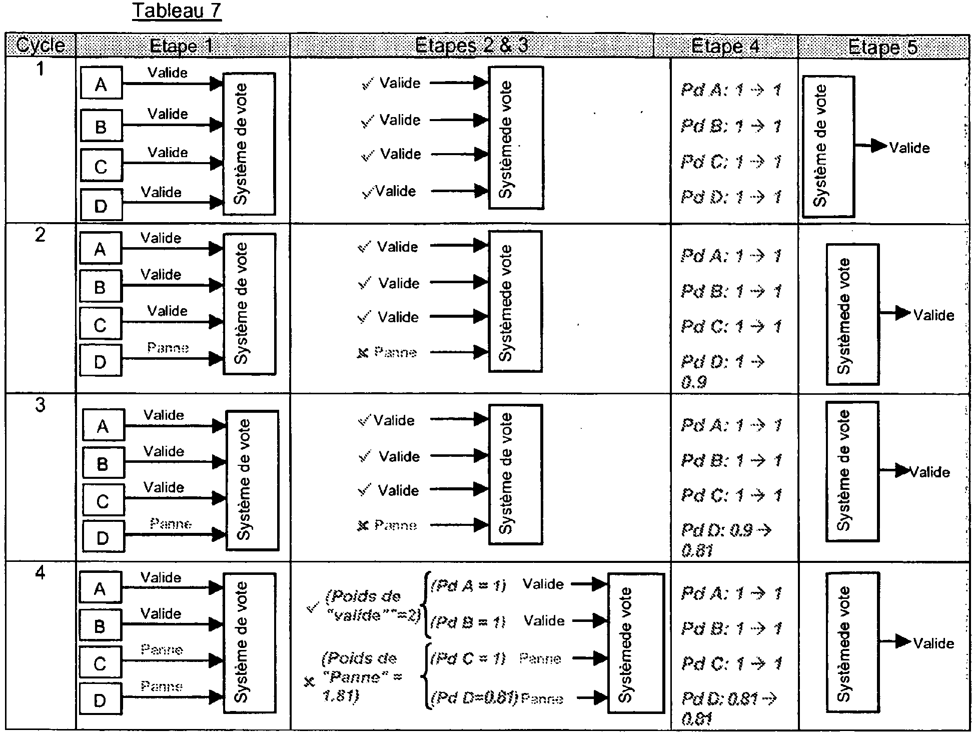

Lors de la première décision, à la première ligne, tous les canaux 12 transmettent au voteur 14 la donnée 16 "Valide". Le voteur, en présence de cette unanimité, valide tous les votes 16. A l'étape 4, chacun des coefficients poids A, poids B, poids C et poids D initialement placés à la valeur "1" sont reconduits à la même valeur. A l'étape 5, le voteur 14 fournit la donnée globale 18 "Valide".

Ensuite, lors d'une nouvelle transmission de données individuelles, comme illustré à la deuxième ligne, le canal D, contrairement aux trois autres, fournit au voteur la donnée "Echec". Le voteur compte donc trois votes "Valide" contre un vote "Echec". Les votes "Valide" étant majoritaires, il les qualifie comme valables à l'inverse du vote "Echec". A l'étape suivante 4, le voteur reconduit donc à l'identique les poids des canaux A, B, C (à la valeur "1 "), tandis qu'il multiplie par un coefficient de 0,9 le poids du canal D. Ce poids se trouve donc porté à la valeur "0,9". A l'étape 5, le voteur transmet la donnée globale "Valide".

Ensuite, à la troisième ligne, de nouveau, les canaux A, B et C transmettent au voteur la donnée individuelle "Valide" tandis que le canal D transmet la donnée "Echec". De même que précédemment, le voteur identifie les votes "Valide" comme majoritaires et les considère comme valables à l'inverse du vote "Echec". Les poids A, B et C sont donc reconduits à l'identique toujours à la valeur "1". De nouveau, en raison de sa situation minoritaire, le canal D voit son poids multiplié par le même facteur 0,9 pour être porté à la valeur "0,81". Le voteur transmet finalement la donnée globale "Valide".

Enfin, à la ligne 4, les canaux A et B transmettent la donnée "Valide" au voteur, tandis que les canaux C et D lui transmettent la donnée "Echec". On voit qu'à l'étape 2 le voteur se trouve donc en présence d'une situation d'égalité de votes : il existe un premier groupe de deux voix correspondant à la donnée "Valide" et un deuxième groupe de deux voix correspondant à la donnée "Echec". Le voteur, dans une telle situation, va prendre en compte l'historique des votes et plus précisément les poids des canaux A, B, C et D. Ainsi, il calcule la somme des poids des canaux ayant donné la donnée "Valide". Cette somme vaut 2. Il calcule de même la somme des poids des canaux ayant donné la donnée "Echec", somme qui vaut 1,81. La somme des poids des deux premiers est donc supérieure à la somme des poids des deux derniers. Le voteur considère donc comme valables les deux premiers votes et comme non valables les deux derniers. A l'étape 4, les poids de tous les canaux sont reconduits à la même valeur. On observe ainsi qu'à l'issue de cette situation d'égalité de votes, les poids ne sont pas modifiés. A l'étape 5, le voteur transmet finalement la donnée globale "Valide".

Ce mode de réalisation peut donc être présenté comme suit.

A la première ligne, on détermine une donnée globale 18 à partir des données individuelles 16 calculées par les applications respectives 12. Cette détermination, résultant d'un unanimité, ne conduit pas à modifier les paramètres.

A la deuxième ligne, on détermine à nouveau une donnée globale cette fois seulement à partir de certaines des données individuelles calculées par les applications respectives. Cette donnée globale est identique à la majorité absolue des données individuelles. Cette détermination se fait sans prendre en compte les paramètres reflétant l'historique des décisions. A la suite de ce vote ayant fait apparaître une situation de majorité, on modifie au moins un des paramètres pour prendre en compte un déroulement de cette dernière étape de détermination. Pour cela, on modifie le paramètre associé à l'application 12 qui a fourni une donnée 16 différente de la valeur globale 18 et on laisse inchangés les autres paramètres. On modifie le paramètre en le multipliant par un facteur prédéterminé qui est indépendant du paramètre et du nombre de modifications éventuelles déjà faites sur le paramètre.

A la troisième ligne, on effectue une nouvelle fois une étape de détermination qui aboutit à une situation de majorité et à une modification de l'un des paramètres.

Enfin, à la quatrième ligne, on détermine une donnée globale à partir de données individuelles calculées par les applications. Il s'avère que les données individuelles reçues par le voteur peuvent être réparties en groupes de données, les données d'un même groupe étant identiques entre elles et différentes de celles des autres groupes et les groupes ayant le cardinal le plus élevé étant au nombre de deux et ayant même cardinal. C'est pourquoi la détermination cette fois prend en compte les paramètres en vue de la fourniture de la donnée globale.

On voit que le procédé peut être mis en oeuvre d'une façon telle que le ou les paramètres ne sont pas mis à jour à l'issue de chaque vote mais seulement à l'issue de certains d'entre eux. De plus, c'est seulement dans certains types de décisions que les paramètres reflétant l'historique des votes sont pris en compte pour la détermination de la donnée globale.

Le procédé selon l'invention pourra être mis en oeuvre au moyen d'un programme comprenant des instructions de codes. Ce programme, lorsqu'il est exécuté sur un ordinateur, est apte à commander la mise en oeuvre des étapes du procédé. Ce programme pourra être enregistré sur un support d'enregistrement de données tel qu'un disque CD ou DVD, un disque dur ou une mémoire flash. On peut enfin prévoir de mettre ce programme à disposition sur un réseau de télécommunications en vue de son téléchargement.

On pourra prévoir de compléter le procédé selon l'invention en appliquant une logique dite du pire des cas. Une telle logique permet, dans une architecture comme celle de la figure 2, de résoudre des cas de discordance de votes entre les canaux. Il existe différentes façons de mettre en oeuvre une logique du pire des cas, mais le principe demeure le même : il s'agit d'évaluer l'impact de chaque possibilité et de retenir celle qui entraîne les conséquences les moins graves. Naturellement, il est nécessaire d'effectuer une analyse approfondie de la fonction accomplie par le système pour identifier tous les comportements possibles et leurs conséquences respectives.

Une telle logique peut être appliquée aux systèmes de surveillance. L'un de ceux-ci, appelé système d'alerte, envoie une alerte à des opérateurs dès que les systèmes de surveillance ne se comportent pas correctement. Suite à une telle alerte, les opérateurs doivent confirmer cette alerte, puis mettre en oeuvre la procédure appropriée afin de replacer l'avion dans un domaine de sécurité.

Dans un tel système, le déclenchement d'une alerte fortuite implique une augmentation de la charge de travail des opérateurs. En effet, ils doivent diagnostiquer la situation, puis invalider l'alerte. Elle entraîne aussi une perte de confiance dans le système. Au contraire, des pannes non détectées génèrent une situation à risques. C'est pourquoi, dans une logique dite du pire des cas, si seulement l'un des canaux détecte une erreur, une alerte sera déclenchée même si la majorité des canaux ne la détecte pas.

Ce type de logique est surtout utilisé comme solution de secours ou mode dégradé pour faire face à des problèmes qui sinon ne pourraient pas être résolus. Par exemple, un système de vote ne peut pas normalement résoudre une situation dans laquelle une combinaison d'erreurs entraîne une égalité de votes. Dans un tel cas, l'application d'une logique du pire des cas permet de définir le canal qui est à privilégier. Une telle logique peut être utilisée en complément avec le procédé de l'invention qui utilise a priori l'historique des votes en cas d'égalité. Elle remplacera alors la prise en compte des paramètres d'historique.

L'invention permet de mieux satisfaire les objectifs de sécurité imposés aux aéronefs. Elle permet de mieux faire face aux situations critiques. Le procédé de l'invention est d'autant plus avantageux que l'on constate maintenant la multiplication des liaisons de communication à bord, du nombre d'applications et d'équipements utilisés, des surveillances mises en place, et des phénomènes de ségrégation physique ou de logiciel.

Bien entendu, on pourra apporter à l'invention de nombreuses modifications sans sortir du cadre de celle-ci, tel que défini par les revendications.

On pourra prévoir que le système de vote coopère avec un nombre de calculateurs 10 égal à un ou supérieur à deux. Le nombre d'applications 12 pourra être égal à deux, trois, quatre, cinq ou supérieur.

## Revendications

1. Procédé de commande d'un aéronef (2), ayant un dispositif mettant en oeuvre l'étape consistant à :
- déterminer une première donnée globale (18), à transmettre au circuit de commande de l'aéronef à partir de certaines seulement parmi des premières données individuelles (16) calculées par des applications respectives (12) dont la fonction est identique ; **caractérisé en ce qu'**il comporte également les étapes consistant à :
- modifier au moins un paramètre pour prendre en compte un déroulement de l'étape de détermination ; et
- déterminer une deuxième donnée globale, à transmettre au circuit de commande de l'aéronef (18) à partir de deuxièmes données individuelles (16) calculées par les applications respectives (12) et à partir du ou des paramètres.

2. Procédé selon la revendication précédente dans lequel la première donnée globale (18) est identique à une majorité, de préférence absolue, des premières données individuelles (16).

3. Procédé selon l'une quelconque des revendications précédentes dans lequel la première étape de détermination est mise en oeuvre sans prendre en compte le ou les paramètres.

4. Procédé selon l'une quelconque des revendications précédentes dans lequel le ou chaque paramètre est un coefficient de pondération affecté à l'une des applications (12).

5. Procédé selon l'une quelconque des revendications précédentes dans lequel, lors de l'étape de modification, le dispositif modifie le ou chaque paramètre associé à l'une des applications (12) ayant calculé une première donnée individuelle (16) différente de la première donnée globale (18) et de préférence laisse inchangé le ou chaque autre paramètre.

6. Procédé selon l'une quelconque des revendications précédentes dans lequel, lors de la deuxième étape de détermination, les données individuelles (16) sont telles que, soit elles sont au nombre de deux et différentes l'une de l'autre, soit elles peuvent être réparties en groupes de données, les données d'un même groupe étant identiques entre elles et différentes de celles des autres groupes, les groupes ayant le cardinal le plus élevé étant au moins au nombre de deux et ayant même cardinal.

7. Programme d'ordinateur comprenant des instructions de code aptes à commander la mise en oeuvre d'un procédé selon l'une quelconque des revendications précédentes lorsqu'il est exécuté sur un ordinateur.

8. Dispositif (14) de commande d'un aéronef (2) apte à déterminer une première donnée globale (18) à partir de certaines seulement parmi des premières données individuelles (16) calculées par des applications respectives (12);
**caractérisé en ce qu'**il est apte à:
- modifier au moins un paramètre pour prendre en compte un déroulement de l'étape de détermination ; et
- déterminer une deuxième donnée globale (18) à partir de deuxièmes données individuelles (16) calculées par les applications respectives (12) et à partir du ou des paramètres.

9. Système de commande (9) d'un aéronef (2), comprenant un dispositif (14) selon la revendication précédente et des applications (12) aptes à fournir les données individuelles (16) au dispositif, le nombre d'applications étant de préférence pair.

10. Aéronef (2), comprenant un dispositif (14) selon la revendication 8 ou un système (9) selon la revendication précédente.

## Patentansprüche

1. Verfahren zum Steuern eines Luftfahrzeugs (2), das eine Vorrichtung hat, die den folgenden Schritt ausführt:
- Bestimmen einer ersten globalen Information (18), die an die Steuerschaltung des Luftfahrzeugs zu übertragen ist, ausgehend von nur bestimmten von ersten individuellen Daten (16), die von jeweiligen Anwendungen (12), deren Funktion identisch ist, berechnet werden;
**dadurch gekennzeichnet, dass** es auch die folgenden Schritte aufweist:
- Ändern mindestens eines Parameters, um einen Ablauf des Bestimmungsschritts zu berücksichtigen; und
- Bestimmen einer zweiten globalen Information (18), die an die Steuerschaltung des Luftfahrzeugs zu übertragen ist, ausgehend von zweiten individuellen Daten (16), die von jeweiligen Anwendungen (12) berechnet werden, und ausgehend von dem oder den Parametern.

2. Verfahren nach dem vorhergehenden Anspruch, bei dem die erste globale Information (18) mit einer Mehrheit, die vorzugsweise absolut ist, der ersten individuellen Daten (16) identisch ist.

3. Verfahren nach einem der vorhergehenden Ansprüche, bei dem der erste Schritt des Bestimmens ohne Berücksichtigung des oder der Parameter umgesetzt wird.

4. Verfahren nach einem der vorhergehenden Ansprüche, bei dem der oder jeder Parameter ein Gewichtungskoeffizient ist, der einer der Anwendungen (12) zugewiesen ist.

5. Verfahren nach einem der vorhergehenden Ansprüche, bei dem, bei dem Änderungsschritt, die Vorrichtung den oder jeden Parameter, der zu einer der Anwendungen (12) gehört, die eine erste individuelle Information (16) berechnet haben, der anders ist als die erste globale Information (18), ändert und vorzugsweise den oder jeden anderen Parameter unverändert lässt.

6. Verfahren nach einem der vorhergehenden Ansprüche, bei dem, bei dem zweiten Bestimmungsschritt, die individuellen Daten (16) derart sind, dass sie entweder in einer Anzahl von zwei vorliegen und voneinander unterschiedlich sind, oder dass sie in Datengruppen verteilt sein können, wobei die Daten einer selben Gruppe untereinander identisch sind und von denen der anderen Gruppen unterschiedlich sind, wobei die Gruppen, die die höchste Kardinalzahl haben, wenigstens in einer Anzahl von zwei vorliegen und die gleiche Kardinalzahl haben.

7. Computerprogramm, das Codeanweisungen enthält, die geeignet sind, um das Umsetzen eines Verfahrens nach einem der vorhergehenden Ansprüche zu steuern, wenn es auf einem Computer ausgeführt wird.

8. Vorrichtung (14) zum Steuern eines Luftfahrzeugs (2), die geeignet ist, um eine erste globale Information (18) ausgehend von nur bestimmten von ersten individuellen Daten (16), die von jeweiligen Anwendungen (12) berechnet werden, zu bestimmen,
**dadurch gekennzeichnet, dass** sie geeignet ist, um:
- mindestens einen Parameter zu ändern, um einen Ablauf des Bestimmungsschritts zu berücksichtigen, und
- eine zweite globale Information (18) ausgehend von zweiten individuellen Daten (16), die von den jeweiligen Anwendungen (12) berechnet werden, und ausgehend von dem oder den Parametern zu bestimmen.

9. Steuersystem (9) eines Luftfahrzeugs (2), das eine Vorrichtung (14) nach dem vorhergehenden Anspruch aufweist und Anwendungen (12), die geeignet sind, um die individuellen Daten (16) zu der Vorrichtung zu liefern, wobei die Anzahl von Anwendungen vorzugsweise geradzahlig ist.

10. Luftfahrzeug (2), das eine Vorrichtung (14) nach Anspruch 8 oder ein System (9) nach dem vorhergehenden Anspruch aufweist.

## Claims

1. A method of controlling an aircraft (2) having a device implementing the step consisting in :
• determining a first global value (18), to be transmitted to the control circuit of the aircraft, on the basis of only some amongst first individual values (16) calculated by respective applications (12), whose function is identical,
**characterized in that** it also includes the steps consisting in
• modifying at least one parameter to take account of how the determination step took place ; and
• determining a second global value to be transmitted to the control circuit of the aircraft (18) on the basis of second individual values (16) calculated by the respective applications (12) and on the basis of the parameter(s).

2. A method according to the preceding claim, wherein the first global value (18) is identical to a majority, preferably an absolute majority, of the first individual values (16).

3. A method according to any preceding claim, wherein the first determination step is implemented without taking account of the parameter(s).

4. A method according to any preceding claim, wherein the or each parameter is a weighting coefficient allocated to one of the applications (12).

5. A method according to any preceding claim, wherein, during the modification step, the device modifies the or each parameter associated with one of the applications (12) that calculated a first individual value (16) that was different from the first global value (18), and preferably leaves the or each other parameter unchanged.

6. A method according to any preceding claim, wherein, during the second determination step, the individual values (16) are such that either they are two in number and different from each other, or else they are distributed in value groups, the values in any one group being mutually identical and different from those in the other groups, the groups having the highest cardinal number being at least two in number and having the same cardinal number.

7. A computer program including code instructions suitable for controlling the implementation of a method according to any preceding claim when executed on a computer.

8. A device (14) for controlling an aircraft (2), the device suitable for determining a first global value (18) on the basis of only some amongst first individual values (16) calculated by respective applications (12),
**characterized in that** it is suitable for :
• modifying at least one parameter to take account of the way in which the determination step took place ; and
• determining a second global value (18) on the basis of second individual values (16) calculated by the respective applications (12) and on the basis of the parameter(s).

9. A system (9) for controlling an aircraft (2), the system comprising a device (14) according to the preceding claim and applications (12) suitable for providing the individual values (16) to the device, the number of applications preferably being even.

10. An aircraft (2) including a device (14) according to claim 8 or a system (9) according to the preceding claim.
